# FASCICULE DE BREVET EUROPEEN

(11) **EP 0 526 276 B1**
(45) Date de publication et mention de la délivrance du brevet: **25.05.1994**
(21) Numéro de dépôt: 92401785.8
(22) Date de dépôt: 25.06.1992
(51) Int. Cl.: B60T 8/48, B60T 8/36, G05D 16/20

(54) **Dispositif de régulation de pression pour circuit hydraulique**
Druckregelvorrichtung für einen Hydraulikkreis
Pressure regulating device for a hydraulic circuit

(30) Priorité: 30.07.1991 FR 9109667
(43) Date de publication de la demande: 03.02.1993
(73) Titulaire: ALLIEDSIGNAL EUROPE SERVICES TECHNIQUES, 93700 Drancy (FR)
(72) Inventeur: Kervagoret, Gilbert, Bendix Europe Serv. Techn., F-93700 Drancy (FR); Cheron, Jean Marc, Bendix Europe Serv. Techn., F-93700 Drancy (FR)
(74) Mandataire: Bentz, Jean-Paul

(56) Documents cités:
- EP-A- 0 369 412
- WO-A-92/07743
- DE-A- 3 644 304
- DE-C- 4 009 640
- GB-A- 2 100 816
- GB-A- 2 119 883
- GB-A- 2 194 010
- US-A- 4 940 295

## Description

La présente invention concerne un dispositif de régulation de pression pour circuit hydraulique.

Elle est particulièrement adaptée aux circuits de freinage des véhicules automobiles équipés d'un système d'antiblocage des roues. Les systèmes connus d'antiblocage mettent en oeuvre, entre une source de fluide sous pression, telle qu'une électropompe ou un maître-cylindre dit "full-power" et un récepteur de pression tel qu'un moteur de frein, une électrovalve commandée par un calculateur en fonction de différents signaux, représentatifs notamment de la vitesse de rotation des roues du véhicule, pour détendre la pression de fluide dans le moteur de frein lorsque le calculateur détecte l'imminence de blocage d'une roue, puis pour faire remonter cette pression lorsque le calculateur détecte une vitesse de rotation de la roue trop importante, jusqu'à ce que la roue manifeste à nouveau une tendance au blocage, les cycles d'admission/détente se renouvelant alors.

La tendance actuelle est de profiter de cet équipement d'antiblocage des roues pour le faire fonctionner également en système d'antipatinage des roues motrices du véhicule. Le calculateur commande alors une montée en pression dans un moteur de frein d'une roue motrice lorsqu'il détecte une vitesse de rotation de cette roue trop importante par rapport à celle d'une roue non motrice, et une détente de la pression dans ce moteur de frein lorsque la vitesse de la roue motrice est voisine de celle d'une roue non motrice.

De tels systèmes utilisent des électrovalves à deux positions, c'est-à-dire fonctionnant en tout ou rien, qui sont génératrices de nombreux inconvénients pour le système d'antiblocage/antipatinage. En effet, pendant les cycles d'admission/détente, l'électrovalve passe de nombreuses fois d'une de ses positions à l'autre, ce qui provoque un bruit important généré par l'équipage mobile de l'électrovalve. D'autre part il apparaît des pointes de pression dans les moteurs de frein, engendrant des régimes transitoires incontrôlables par le calculateur. De plus, ces systèmes sont généralement très complexes et nécessitent de nombreuses électrovalves, multipliant ainsi les inconvénients ci-dessus.

La présente invention a donc pour but de remédier à ces inconvénients en proposant un dispositif de régulation de pression pour circuit hydraulique, par exemple pour des circuits de freinage de véhicules automobiles, qui permette un fonctionnement en antiblocage et en antipatinage des roues, qui soit simple et fiable, et dont le nombre d'électrovalves soit réduit au minimum, de façon à réduire en outre le coût de tels systèmes.

Dans ce but, l'invention propose d'utiliser une électrovalve dite proportionnelle assurant dans le circuit utilisateur une pression hydraulique fonction du courant circulant dans la bobine de l'électrovalve dans une plage déterminée de déplacement du noyau de l'électrovalve.

Une telle électrovalve présente alors l'avantage de pouvoir être commandée en faisant simplement varier le courant électrique circulant dans la bobine sans nécessiter de battements de la partie mobile ; il en résulte donc une forte diminution des pointes de pression dans les moteurs de freins. En outre, une telle électrovalve peut aisément être commandée par un calculateur assurant un découpage à fréquence variable d'un courant continu tel qu'on le trouve à bord d'un véhicule automobile, ou bien un découpage à fréquence fixe et à rapport cyclique variable, l'intensité du courant intégré par la bobine étant alors fonction du rapport cyclique.

Une telle électrovalve est par exemple décrite dans US-A-4,744,389. Toutefois, l'électrovalve décrite dans ce document ne peut pas être disposée dans un circuit hydraulique de freinage à antiblocage des roues du fait des pressions mises en oeuvre, notamment lors de l'excitation de l'électrovalve. En effet, l'électrovalve de ce document est conçue pour fonctionner en permanence dans un système de régulation d'une pression relativement faible. Cette limitation physique interdit donc l'utilisation d'une telle électrovalve avec des pressions élevées dans le moteur hydraulique. En outre, cette électrovalve ne permet pas de faire croître linéairement la pression lorsque le courant décroît linéairement dans la bobine et vice-versa.

Les systèmes d'antipatinage connus, comme par exemple de GB-A- 2 119 883, s'ils utilisent de nombreux composants des systèmes d'antiblocage, tels que les capteurs de vitesse des roues, le calculateur, la source de fluide sous pression, etc., nécessitent néanmoins des composants supplémentaires tels que d'autres électrovalves, une source spécifique de fluide sous pression, etc.

La présente invention propose donc d'utiliser pour le fonctionnement en antipatinage les électrovalves proportionnelles qui sont utilisées pour le fonctionnement en antiblocage, grâce à une valve différentielle à pression-dépression.

On réduit donc bien ainsi le nombre d'électrovalves à un minimum, à savoir une par roue, pour un système combiné d'antiblocage/antipatinage.

La présente invention propose donc un dispositif de régulation de pression d'un circuit hydraulique de freinage d'un véhicule automobile équipé de systèmes d'antiblocage et d'antipatinage des roues, comportant au moins une première source de fluide sous pression reliée à un réservoir de fluide sous basse pression et dans au moins un sous circuit de la première source de fluide sous pression une seconde source de fluide sous pression et deux récepteurs de pression, caractérisé en ce qu'un des récepteurs de pression est associé à une roue motrice du véhicule et l'autre récepteur de pression est associé à une roue non motrice du véhicule, une électrovalve proportionnelle étant associée à chaque récepteur de pression et étant reliée à la première source de fluide sous pression et à la seconde source de fluide sous pression, et en ce qu'une valve différentielle à pression-dépression, comportant une chambre soumise à la pression régnant dans le récepteur de pression associé à la roue non motrice, cette chambre servant à la commutation de la valve, ferme au repos et en phase d'antiblocage une communication entre la première source de fluide sous pression et l'alimentation de la seconde source de fluide sous pression, cette communication étant ouverte lorsque la seconde source de fluide sous pression est mise en oeuvre pour une phase d'antipatinage.

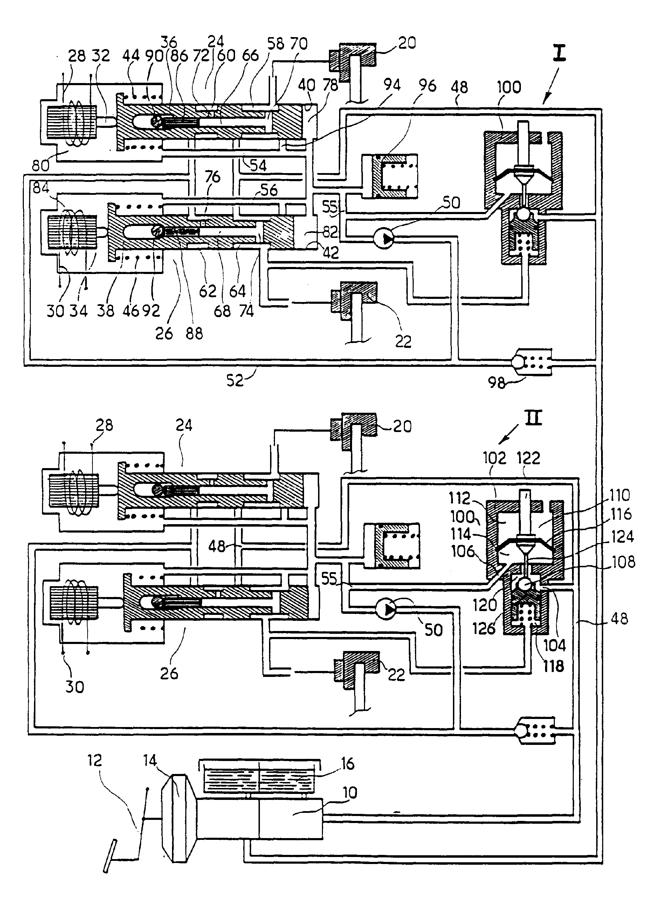

D'autres buts, caractéristiques et avantages de la présente invention ressortiront de la description qui suit d'un mode de réalisation, faite en référence au dessin annexé dans lequel :
- la Figure unique représente schématiquement un circuit de freinage réalisé selon l'invention.

On a représenté sur la Figure un circuit de freinage qui comporte, de façon classique, un maître-cylindre 10 actionné par une pédale de freinage 12 au travers par exemple d'un servofrein à dépression 14. Le maître-cylindre 10 est alimenté par un réservoir de fluide 16 et est du type en tandem, c'est-à-dire qu'il est susceptible, lors de son actionnement, d'engendrer une augmentation de pression du fluide dans un circuit dit primaire I et dans un circuit dit secondaire II, identique au premier ; les numéros de référence qui seront utilisés pour les composants de chaque circuit seront donc identiques dans la description qui suit, le circuit primaire I illustrant le fonctionnement en antiblocage et le circuit secondaire II illustrant le fonctionnement en antipatinage.

Chaque circuit est relié au repos à des moteurs de frein 20 par exemple pour une roue motrice et 22 pour une roue non motrice, qui sera appelée par la suite roue libre, par l'intermédiaire d'électrovalves proportionnelles 24 et 26.

On sait que la bobine des électrovalves dites proportionnelles, présente la caractéristique essentielle de pouvoir fournir un effort sensiblement constant pour un courant déterminé dans une plage de déplacement du noyau magnétique non négligeable, de l'ordre de 2 à 3 mm. Cette caractéristique est généralement obtenue grâce à une géométrie particulière des pièces polaires. Cette caractéristique est mise en oeuvre dans la présente invention pour assurer la fonction requise par modulation du courant circulant dans la bobine pour éviter un fonctionnement avec une partie mobile battant très rapidement.

Sur la Figure, on voit de telles électrovalves 24 et 26 comprenant chacune une bobine d'excitation 28,30, un noyau magnétique coulissant pourvu de son poussoir 32,34 s'appuyant sur un tiroir 36,38 coulissant dans un alésage 40,42.

Un ressort d'asservissement 44,46 sollicite le tiroir 36,38 vers le poussoir 32,34 de chaque électrovalve 24,26. Le tiroir 36,38 est usiné de façon à pouvoir mettre sélectivement en communication le moteur de frein 20,22 avec le maître-cylindre 10 par un conduit 48, avec une source hydrodynamique de fluide sous pression telle qu'une électropompe 50, éventuellement associée à un accumulateur de pression (non représenté), par un conduit 52, ou avec une capacité basse pression 96 par un conduit 54,56.

Pour ce faire, le tiroir 36,38 est formé avec deux gorges périphériques annulaires 58,60 ; 62,64 et avec un alésage central borgne faisant chambre de réaction 66,68 communiquant avec les gorges annulaires au moyen de perçages radiaux 70,72 ; 74,76 , le perçage 72,76 faisant office de restriction. Les chambres 78,80 ; 82,84 situées de part et d'autre du tiroir 36,38 dans l'alésage 40,42 sont à la même pression et communiquent entre elles par l'intermédiaire des conduits 54,56 et avec le côté aspiration de l'électropompe 50 par un conduit 55. L'alésage central 66,68 est fermé de façon quasi-étanche par une aiguille de réaction 86,88 en appui sur le corps dans lequel est formé l'alésage 40,42 par l'intermédiaire d'une butée 90,92 et forme une chambre de réaction déterminant une force de réaction s'ajoutant à la force engendrée par la bobine 28,30.

En position de repos, telle qu'on l'a représentée pour l'électrovalve 26, la source de fluide sous pression 10 est en communication avec le moteur de frein 22 par l'intermédiaire de la gorge annulaire 64 et du conduit 48, et avec la chambre de réaction 68.

Lorsque le calculateur détecte l'imminence du blocage d'une roue, par exemple celle qui est associée au moteur de frein 20, il commande l'excitation de l'électrovalve 24 associée à cette roue, et simultanément la mise en route de l'électropompe 50. Tout d'abord le courant circulant dans la bobine engendre une force s'opposant seulement à celle du ressort 44 quelle que soit la pression régnant dans le circuit hydraulique puisque les chambres 78 et 80 communiquent entre elles. La pression régnant dans la chambre de réaction 68 aide l'électrovalve. Ceci permet avantageusement à l'électrovalve de ne pas présenter une importante consommation électrique. Le déplacement du tiroir 36 à l'encontre du ressort d'asservissement 44 interrompt la fourniture de fluide sous pression de la source 10 au moteur de frein 20 par l'obturation du conduit 48 avant que le courant dans la bobine 28 n'atteigne son intensité nominale. Puis, l'intensité étant nominale, le tiroir 36, dans son mouvement à l'encontre du ressort 44, ferme le conduit 52, isolant ainsi le moteur de frein 20 de la source de fluide sous haute pression constituée par l'électropompe 50. Le tiroir 36 ferme également un conduit 94 de liaison avec le conduit 54 relié, comme on l'a vu plus haut, au côté aspiration de l'électropompe 50, et à une capacité basse pression 96.

Lorsque le calculateur commande l'augmentation du courant dans la bobine 28, il s'ensuit un mouvement du tiroir 36 tel que le conduit 94 est partiellement découvert, ce qui a pour effet de relier le moteur de frein 20 au conduit 54, à la capacité 96 et au côté aspiration de l'électropompe 50.

Il se produit donc une détente de la pression du fluide dans le moteur de frein 20. On aura compris que le mouvement du tiroir 36 à l'encontre du ressort 44 est engendré par le courant dans la bobine 28 et est favorisé par la réaction hydraulique dans l'enceinte 66 qui engendre une force s'ajoutant à celle qui est provoquée par la bobine et opposée à celle qui est engendrée par le ressort d'assistance 44. En diminuant l'intensité du courant dans la bobine 28, la pression ayant chuté dans le moteur de frein 20, la force de réaction hydraulique due à l'enceinte 66 diminue et le tiroir se déplace dans l'autre sens, refermant la communication entre le moteur de frein 20 et la capacité 96, et rétablissant ensuite la communication entre la source 50 et le moteur de frein 20 par l'intermédiaire de la restriction 72 permettant une augmentation moins rapide de la pression dans le moteur de frein 20. Si l'on augmente l'intensité du courant dans la bobine, la pression va à nouveau chuter dans le moteur de frein 20 puisque la communication entre lui et le côté aspiration de l'électropompe 50 par l'intermédiaire de la gorge 58 sera réouverte.

On constate donc que d'une augmentation du courant dans la bobine 28 résulte une diminution de la pression du fluide dans le moteur de frein 20. On voit alors qu'en modulant, par exemple par découpage, le courant circulant dans la bobine 28, le tiroir 36 va prendre une position qui est fonction de la pression régnant dans la chambre 66, et l'on pourra, en pilotant judicieusement ce courant, appliquer au moteur de frein 20 la pression de fluide désirée. En effet, la réaction hydraulique engendrée dans l'enceinte 66 va automatiquement ouvrir ou fermer les communications entre le moteur de frein 20 et la source de fluide sous pression 50 et entre le moteur de frein 20 et la capacité basse pression 96 pour chaque valeur déterminée de l'intensité du courant circulant dans la bobine 28.

On obtient donc bien un dispositif de régulation de pression pour circuit de freinage qui ne nécessite qu'une seule électrovalve par roue pour assurer un fonctionnement en antiblocage, cette électrovalve étant du type proportionnel, ne consommant que très peu d'énergie électrique grâce à sa chambre de réaction. On pourra avantageusement disposer un clapet anti-retour 98 entre les conduits 52 et 48 interdisant au fluide du circuit hydraulique de remonter vers l'électropompe 50 en dehors des périodes d'antiblocage. Un tel clapet anti-retour sera alors taré à une certaine valeur pour que, lorsque l'électropompe 50 est en fonctionnement, la pression engendrée par celle-ci soit limitée à une certaine valeur.

Le dispositif qui vient d'être décrit est également capable d'assurer la régulation de pression dans le circuit de freinage pour assurer un fonctionnement en antipatinage. Un tel type de fonctionnement est illustré sur la Figure dans le circuit secondaire II.

On voit que chaque circuit comporte une valve différentielle 100 à pression-dépression. Cette valve comporte dans un corps 102 un orifice 104 relié au conduit 48 menant à une chambre de travail du maître-cylindre 10. Un orifice 106 est relié au conduit 55 menant à l'entrée d'aspiration de l'électropompe 50. Un clapet par exemple constitué par une bille 108 chargée par un ressort faiblement taré interdit toute communication au repos entre ces deux orifices 104 et 106. Une enceinte 110 est séparée en deux chambres 112 et 114 de façon étanche par une membrane souple 116. La chambre 112 est reliée à l'atmosphère, et la chambre 114 est reliée par l'orifice 106 au conduit 55 menant à l'entrée d'aspiration de l'électropompe 50.

Dans un alésage du corps 102 coulisse de façon étanche un piston 126, poussant la bille 108, et délimitant dans cet alésage une chambre 118 soumise à la pression régnant dans le moteur de frein 22 de la roue non motrice et une chambre 120 reliée par l'orifice 104 au conduit 48 menant au maître-cylindre 10. Un piston 122 coulisse dans le corps 102, il est solidaire de la membrane 116 et il porte une aiguille 124 en regard de la bille 108.

Lorsqu'elle est au repos comme représentée dans le circuit primaire, la valve différentielle 100, et plus particulièrement la bille 108, interdit la communication entre le maître-cylindre 10 et le côté aspiration de l'électropompe 50. Ainsi, un freinage normal, c'est-à-dire encore lorsque l'électropompe 50 et les électrovalves 24 et 26 sont au repos, a lieu comme on l'a décrit en référence au circuit primaire.

Un fonctionnement en phase d'antiblocage est identique à celui qui a été décrit plus haut, la pression dans le moteur de frein 22 est également présente dans la chambre 118 de la valve 100, et confirme par conséquent la fermeture de la communication entre les chambres 114 et 120 de la valve 100, fermeture déjà assurée par la pression du fluide provenant du maître-cylindre 10, et s'appliquant sur la bille 108.

Lorsque le calculateur détecte une tendance au patinage, c'est-à-dire une vitesse de rotation de la roue motrice 20 supérieure d'une valeur prédéterminée à celle de la roue libre 22, il commande alors simultanément la mise en route de l'électropompe 50 et l'excitation maximale de l'électrovalve 26 associée au moteur de frein 22 de la roue libre. Ce faisant, le moteur de frein 22 est isolé du maître-cylindre 10 et relié à la capacité basse pression 96, le conduit 48 étant obturé. L'électropompe 50 étant en marche, son côté aspiration se trouve donc en dépression, et cette dépression est transmise par le conduit 55 à l'orifice 106 et à la chambre 114 de la valve différentielle 100. L'aiguille 124 du piston 122 relié à la membrane 116 pousse donc sans effort la bille 108, mettant ainsi en communication par la chambre 120, le côté aspiration de l'électropompe 50 et le conduit 55 avec le conduit 48, le maître-cylindre 10 et le réservoir basse pression 16, assurant ainsi l'alimentation de l'électropompe 50 par le réservoir 16.

Le calculateur a également commandé simultanément l'excitation de l'électrovalve 24 associée au moteur de frein 20 de la roue motrice, pour assurer la mise en pression de ce dernier d'une manière analogue à celle qui a été décrite pour la phase antiblocage, et qui ne sera pas reprise en détail. Lorsque la vitesse de rotation de la roue motrice est jugée excessive par rapport à celle des roues libres, le calculateur fait diminuer le courant dans la bobine 28. Le tiroir 36 recule alors et permet la communication du moteur de frein 20 avec la sortie de l'électropompe 50, ce qui engendre une action de freinage sur la roue motrice. Lorsque la vitesse de rotation de cette dernière est égale ou légèrement inférieure à celle des roues libres, le calculateur commande alors une augmentation du courant dans la bobine 28, ce qui fait avancer le tiroir 36 et met le moteur de frein 20 en communication avec le côté aspiration de l'électropompe 50 et avec le réservoir 16 par l'intermédiaire de la valve différentielle 100. La pression dans le moteur de frein 20 peut donc chuter très rapidement, laissant alors la roue associée au moteur de frein 20 soumise à l'action du couple exercé par le moteur du véhicule. Ces phases d'admission/détente se poursuivent jusqu'à ce que la tendance au patinage de la roue motrice ait disparue.

On a donc bien décrit un système de régulation de pression, qui permet d'assurer un fonctionnement en antiblocage et en antipatinage tout en n'utilisant qu'une seule électrovalve par roue, et une valve différentielle par roue non motrice. Un tel système est ainsi particulièrement simple et donc fiable et peu onéreux.

## Revendications

1. Dispositif de régulation de pression d'un circuit hydraulique de freinage d'un véhicule automobile équipé de systèmes d'antiblocage et d'antipatinage des roues, comportant au moins une première source de fluide sous pression (10) reliée à un réservoir de fluide sous basse pression (16) et dans au moins un sous circuit (I,II) de la première source de fluide sous pression (10) une seconde source de fluide sous pression (50) et deux récepteurs de pression (20,22), caractérisé en ce qu'un des récepteurs de pression (20) est associé à une roue motrice du véhicule et l'autre récepteur de pression (22) est associé à une roue non motrice du véhicule, une électrovalve proportionnelle (24,26) étant associée à chaque récepteur de pression (20,22) et étant reliée à la première source de fluide sous pression (10) et à la seconde source de fluide sous pression (50), et en ce qu'une valve différentielle à pression-dépression (100), comportant une chambre (118) soumise à la pression régnant dans le récepteur de pression (22) associé à la roue non motrice, cette chambre (118) servant à la commutation de la valve (100), ferme au repos et en phase d'antiblocage une communication entre la première source de fluide sous pression (10) et l'alimentation de la seconde source de fluide sous pression (50), cette communication étant ouverte lorsque la seconde source de fluide sous pression (50) est mise en oeuvre pour une phase d'antipatinage.

## Claims

1. Device for regulating the pressure of a hydraulic brake circuit of a motor vehicle equipped with anti-lock and anti-slip systems for the wheels, comprising at least a first source of fluid under pressure (10) connected to a reservoir of fluid under low pressure (16) and, in at least one subcircuit (I, II) of the first source of fluid under pressure (10), a second source of fluid under pressure (50) and two pressure receivers (20, 22), characterized in that one of the pressure receivers (20) is associated with a driving wheel of the vehicle and the other pressure receiver (22) is associated with a non-driving wheel of the vehicle, a proportional solenoid valve (24, 26) being associated with each pressure receiver (20, 22) and being connected to the first source of fluid under pressure (10) and to the second source of fluid under pressure (50), and in that a differential pressure/vacuum valve (100) comprising a chamber (118) subjected to the pressure prevailing in that pressure receiver (22) which is associated with the non-driving wheel, this chamber (118) serving to switch the valve (100) over, closes, at rest, and in anti-lock phase, a communication between the source of fluid under pressure (10) and the supply of the second source of fluid under pressure (50), this communication being opened when the second source of fluid under pressure (50) is put into operation for an anti-slip phase.

## Patentansprüche

1. Druckregelvorrichtung für einen hydraulischen Bremskreis eines Kraftfahrzeugs, das mit einem Antiblockier- und einem Antischlupfsystem für die Räder ausgestattet ist, mit wenigstens einer ersten Fluiddruckquelle (10), die mit einem Niederdruckfluidvorratsbehälter (16) verbunden ist, und mit einer zweiten Fluiddruckquelle (50) und zwei Druckaufnehmern (20, 22) in wenigstens einem Nebenkreis (I, II) der ersten Fluiddruckquelle (10), dadurch gekennzeichnet, daß einer der Druckaufnehmer (20) einem angetriebenen Fahrzeugrad zugeordnet ist und daß der andere Druckaufnehmer (22) einem nicht angetriebenen Fahrzeugrad zugeordnet ist, wobei jedem Druckaufnehmer (20 bzw. 22) ein Proportionalelektroventil (24 bzw. 26) zugeordnet und mit der ersten Fluiddruckquelle (10) bzw. der zweiten Fluiddruckquelle (50) verbunden ist, und daß ein Überdruck-Unterdruck-Differentialventil (100), das eine Kammer (118) enthält, die dem Druck ausgestzt ist, der in dem dem nicht angetriebenen Rad zugeordneten Druckaufnehmer (22) herrscht, wobei diese Kammer (118) zur Umschaltung des Ventils (100) dient, in der Ruhestellung und in einer Antiblockierbetriebsphase eine Verbindung zwischen der ersten Fluiddruckquelle (10) und der Versorgung der zweiten Fluiddruckquelle (50) schließt, wobei diese Verbindung geöffnet ist, wenn die zweite Fluiddruckquelle (50) für eine Antischlupfbetriebsphase in Betrieb gesetzt wird.
